# EUROPEAN PATENT APPLICATION

(11) **EP 4 458 210 A1**
(43) Date of publication of application: **06.11.2024**
(21) Application number: 22892175.5
(22) Date of filing: 22.11.2022
(51) Int. Cl.: A47B 13/02, A47B 47/00

(54) **LIFTING DESK SUPPORT HAVING RAPID MOUNTING STRUCTURES, AND LIFTING DESK**

(71) Applicant: Changzhou Kaidi Electrical Co., Ltd., Changzhou, Jiangsu 213000 (CN)
(72) Inventor: LIU, Bin, hangzhou, Jiangsu 213101 (CN); XU, Jindong, hangzhou, Jiangsu 213101 (CN); WANG, Huilong, hangzhou, Jiangsu 213101 (CN)
(74) Representative: Herrero & Asociados, S.L.
(86) International application number: PCT/CN2022/133580
(87) International publication number: WO 2023/083384

(57) **Abstract**

A lifting desk support having rapid mounting structures, and a lifting desk. The lifting desk support comprises a longitudinal beam (3) and a cross beam assembly, wherein the at least one set of rapid mounting structures is arranged on the longitudinal beam (3) and the cross beam assembly. The set of rapid mounting structures comprises a boss (4), which is arranged on the longitudinal beam (3) and has a slope; and a notch (1), which is provided on the cross beam assembly, wherein a locking block (41) of the boss (3) is embedded into the cross beam assembly by means of a first groove section (11) of the notch (1); and a force in an axial direction of a cross beam (2) is applied to the longitudinal beam (3), such that the locking block (41) enters a second groove section (12) of the notch (1), such that locking is achieved. By means of the lifting desk support, the longitudinal beam (3) and the cross beam assembly are rapidly assembled, such that assembly is rapid and efficient, and the cost is saved on.

## Description

### TECHNICAL FIELD

The present disclosure relates to the field of office furniture, in particular to a lifting desk support having rapid mounting structures and a lifting desk including the rapid mounting structures.

### BACKGROUND

When the lifting desk is assembled, the support plays a key role in supporting the desk top and connecting the desk leg. Ordinary supports are generally composed of cross beams and longitudinal beams. During assembly, the support is connected with the desk legs by bolts. When customers assemble them, they need to tighten the bolts to realize the assembly connection between the support and the desk legs. The process is relatively complicated and wastes a lot of time and manpower.

Since then, in order to save time and labor costs, the industry has gradually replaced the original screw assembly with welding. Of this structure, a cross beam and a longitudinal beam are welded together, and the locking and fastening of the desk surface support and the desk leg is achieved through a rapid mounting structure. This structure simplifies the assembly steps and saves time and manpower. However, in terms of packaging structure, since the longitudinal beams and cross beams need to be welded vertically, the packaging size of the whole desk surface support is greatly increased, the packaging cost increases accordingly, the number of desk surface supports packaged decreases accordingly, and the cost of a single product will inevitably increase accordingly. In addition, the longitudinal beams and cross beams are welded together, which makes the production process more complicated and easily causes local thermal deformation and environmental pollution of parts. It is really undesirable.

Later, in order to replace the welding process, rivets were used to connect the cross beam and longitudinal beam, which put forward higher requirements for workers' operation steps and parts positioning. Rivet connection increases the cost and is prone to loose, which is also undesirable.

Therefore, a support structure with low cost, simple processing procedure and fast and convenient connection between cross beam and longitudinal beam is required to meet the requirements of customers.

### SUMMARY

The technical problem to be solved by the present disclosure is that in order to solve the problems existing in the above background art, an improved lifting desk support having rapid mounting structures and a lifting desk including rapid mounting structures are provided.

The technical scheme adopted by the present disclosure to solve its technical problems is as follows: A lifting desk support having rapid mounting structures, includes: a cross beam assembly, a longitudinal beam, a lifting desk leg and a baseboard; the cross beam assembly is mounted above the lifting desk leg, the baseboard is mounted below the lifting desk leg, and the longitudinal beam is mounted at a side end of the cross beam assembly; the cross beam assembly and the longitudinal beam are provided with at least one set of rapid mounting structures, each set of rapid mounting structures includes a boss arranged on the longitudinal beam and a notch defined on the cross beam assembly, and the boss is embedded into the notch to realize connection between the cross beam assembly and the longitudinal beam.

In an embodiment, the boss includes a locking block and a connecting part, the notch includes a first groove section and a second groove section which are communicated with each other. The first groove section is used to pass through the locking block, and the second groove section is used to limit the locking block; the first groove section is communicated with the second groove section, and the locking block passes through the notch through the first groove section, by applying a transverse force along an axial direction of the cross beam assembly, and the locking block enters the second groove section of the notch, such that the limiting is realized.

In an embodiment, the boss is formed by bending and extending downwards from a plane of the longitudinal beam, the locking block has a slope with a upper surface of the longitudinal beam; the locking block passes through the notch through the first groove section and then enters the second groove section of the notch by applying the transverse force along the axial direction of the cross beam assembly, when the locking block is mounted into the second groove section, the locking block and the upper surface of the longitudinal beam are respectively arranged on two sides of the plane of the cross beam assembly, and the locking block is gradually clamped against a tube wall of the cross beam assembly by applying the transverse force along the axial direction of the cross beam assembly, such that the longitudinal beam and the cross beam assembly are locked.

In an embodiment, in the direction perpendicular to the axial direction of the cross beam assembly, a width of the first groove section is greater than that of the second groove section, a width of the locking block is less than or equal to that of the first groove section and greater than that of the second groove section, and a width of the locking block is greater than that of the connecting part.

In an embodiment, the notch may also include a third groove section. The first groove section and the third groove section are respectively arranged on both sides of the second groove section, and the second groove section and the third groove section are respectively communicated with the first groove section.

In an embodiment, the cross beam assembly may be of left and right split structures, which are slidably connected through connecting beams to realize axial expansion.

In an embodiment, the cross beam assembly includes two cross beams arranged in parallel and fixed by several bridge pieces.

In an embodiment, at least one end of each connecting beam is provided with a spacing device, and the cross beam assembly is fixedly connected with a fastening device which can be used for fixing the connecting beam, such that the expansion range is limited through the cooperation between the spacing device and the fastening device.

In an embodiment, after the longitudinal beam is assembled with the cross beam assembly, a fastening screw can pass through a preset through-hole on the longitudinal beam and the preset through-hole on a bridge piece to connect the support with a desk top.

A lifting desk includes the above lifting desk support having rapid mounting structures.

The present disclosure has the beneficial effects of solving the defects in the background art and having the following advantages:
1. Rapid assembly of the longitudinal beam and the cross beam assembly improves assembly efficiency and saves labor costs;
2. The rapid assembly and disassembly of the longitudinal beam and cross beam assembly reduces the packaging volume and increases the number of desk surface supports to be packaged;
3. As the most preferred double notch-double boss pairing setting, it ensures that the desk surface is level and the user experience is upgraded;
4. The rapid mounting structure is simple and requires fewer types of parts;
5. The notch on the cross beam notch and the boss on the longitudinal beam can be made by die stamping. The process is simple and reduces material costs and manual processing costs;
6. The setting of expansion and the spacing device matches desk tops with different lengths, which improves the universality of the support.

### BRIEF DESCRIPTION OF DRAWINGS

FIG. 1 is a perspective view of a lifting desk support having rapid mounting structures.
FIG. 2 is an enlarged view of Position A in FIG. 1.
FIG. 3 is an enlarged view of Position B in FIG. 2.
FIG. 4 is an alternative embodiment of FIG. 3.
FIG. 5 is a left side view of the longitudinal beam in the rapid mounting structure.
FIG. 6 is a top view of the longitudinal beam in the rapid mounting structure.
FIG. 7 is a partially exploded view of a lifting desk support having rapid mounting structures.
FIG. 8 is an exploded view of a lifting desk comprising the present disclosure.
FIG. 9 is an assembly diagram of a lifting desk comprising the present disclosure.
FIG. 10 is a mounting diagram of a support comprising the present disclosure.
FIG. 11 is a mounting diagram of another support comprising the present disclosure.

In the drawings: 1-notch; 11-first groove section; 12-second groove section; 13-third groove section; 2-cross beam; 21-bridge piece; 3-longitudinal beam; 31-through-hole; 32-upper surface; 4-boss; 41-locking block; 42-connecting part; 5-connecting beam; 6-fastening device; 7-spacing device; 8-desk top; 9-fastening screw; 10-lifting desk leg; 14-baseboard.

### DETAILED DESCRIPTION OF EMBODIMENTS

The present disclosure will now be further described in detail with reference to the drawings and preferred embodiments. These drawings are simplified schematic diagrams for explaining only the basic structure of the present disclosure in a schematic manner, and therefore show only the construction related to the present disclosure.

### Embodiment 1

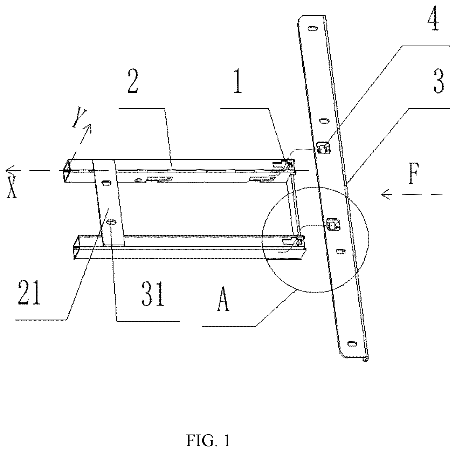

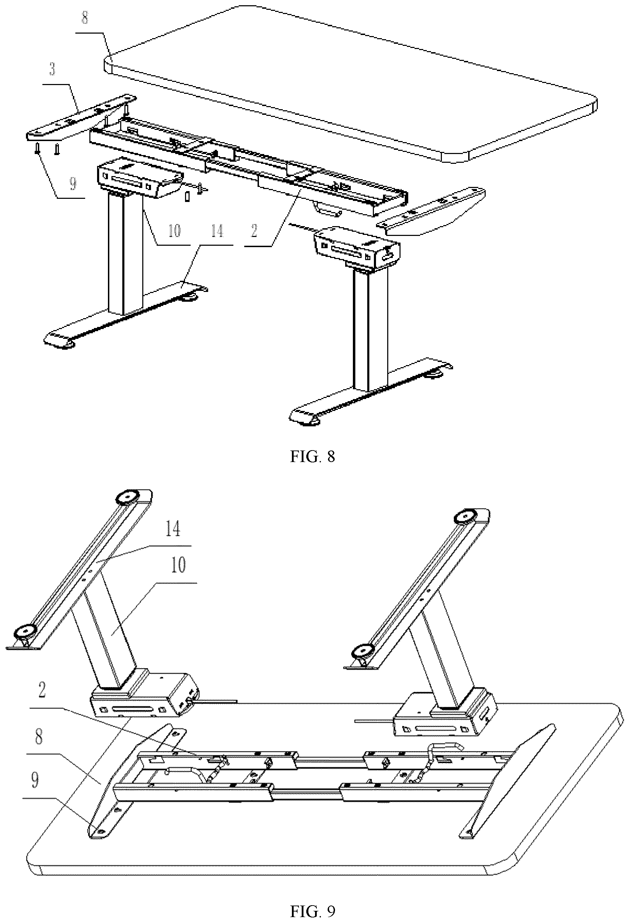

As shown in FIG. 1 to FIG. 10, a lifting desk support having rapid mounting structure includes: a cross beam assembly, a longitudinal beam 3, a lifting desk leg 10 and a baseboard 14, the cross beam assembly is mounted above the lifting desk leg 10, the baseboard 14 is mounted below the lifting desk leg 10, and the longitudinal beam 3 is mounted at a side end of the cross beam assembly; the cross beam assembly is provided with bridge pieces 21.

As shown in FIG. 1, the cross beam assembly and the longitudinal beam 3 are provided with two sets of rapid mounting structures, each rapid mount structure includes a boss 4 on the longitudinal beam 3 and a notch 1 on the cross beam assembly.

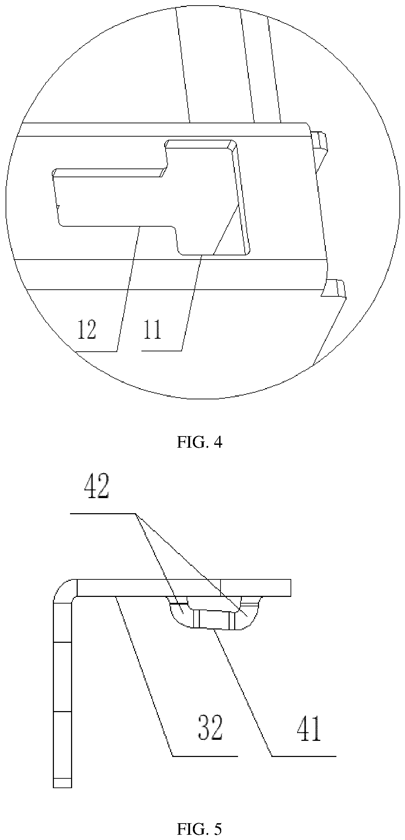

As shown in FIG. 4, the notch 1 includes a first groove section 11 and a second groove section 12.

As shown in FIG. 5 to FIG. 6, the boss 4 includes a locking block 41 and a connecting part 42. The boss 4 is formed by bending and extending downwards from the plane of the longitudinal beam 3, and the locking block 41 has a slope with the upper surface 32 of the longitudinal beam 3.

As shown in FIG. 1 to FIG. 2, in the direction perpendicular to the axis of the cross beam assembly, a width of the first groove section 11 is greater than that of the second groove section 12, a width of the locking block 41 is less than or equal to that of the first groove section 11 and greater than that of the second groove section 12, and a width of the locking block 41 is greater than that of the connecting part 42.

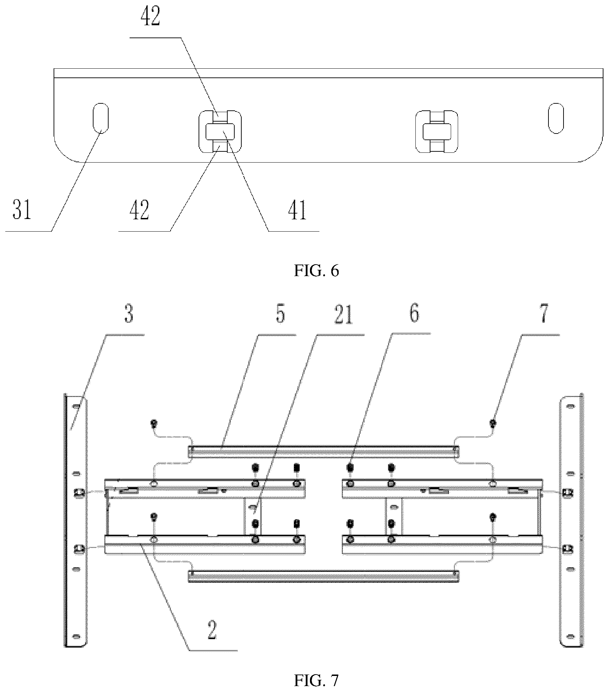

As shown in FIG. 7 to FIG. 10, two cross beam assemblies are arranged on both sides of the connecting beam 5, and the connecting beam 5 is nested with the cross beam assembly. The connecting beam 5 is provided with a spacing device 7. The cross beam assembly is provided with a fastening device 6 for fixing the connecting beam 5. Two longitudinal beams 3 are respectively arranged outside the cross beam assembly.

When assembling, firstly the locking block 41 of the boss 4 on the longitudinal beam 3 passes through the first groove section 11 of the notch 1 on the cross beam assembly, and then a transverse force in the axial direction of the cross beam 2 is applied to the longitudinal beam 3. When the locking block 41 enters the second groove section 12 of the notch 1, the locking block 41 and the upper surface 32 of the longitudinal beam 3 are respectively arranged on both sides of the plane of the cross beam assembly. When the transverse force in the axial direction of the cross beam 2 is continuously applied, the locking block 41 will be gradually clamped against the tube wall of the cross beam assembly. In this way, the longitudinal beam 3 and the cross beam assembly are locked.

After the longitudinal beam 3 and the cross beam assembly are mounted, the lifting desk leg 10 and the baseboard 14 are connected and fixed in turn, and then the fastening screw 9 passes through the preset through-hole 31 on the longitudinal beam 3 and the preset through-hole 31 on the bridge piece 21 of the cross beam assembly to realize the connection between the desk top 8 and the lifting desk support while ensuring that the longitudinal beam 3 will not be separated from the cross beam assembly.

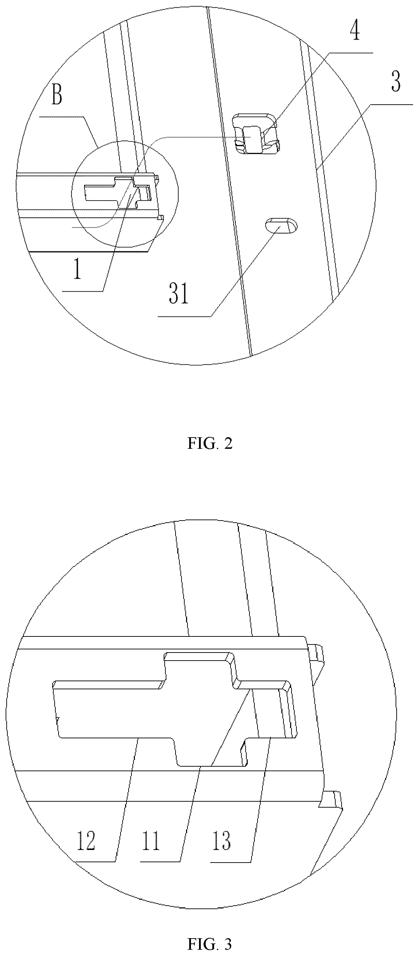

FIG. 4 shows another embodiment of the notch 1 on the cross beam assembly, which includes a first groove section 11 and a second groove section 12, connected to each other; the notch 1 shown in FIG. 3 includes a first groove section 11, a second groove section 12, and a third groove section 13, and the second groove section 12 and the third groove section 13 are arranged at both sides of the first groove section 11, respectively and communicated with the first groove section 11, respectively.

### Embodiment 2

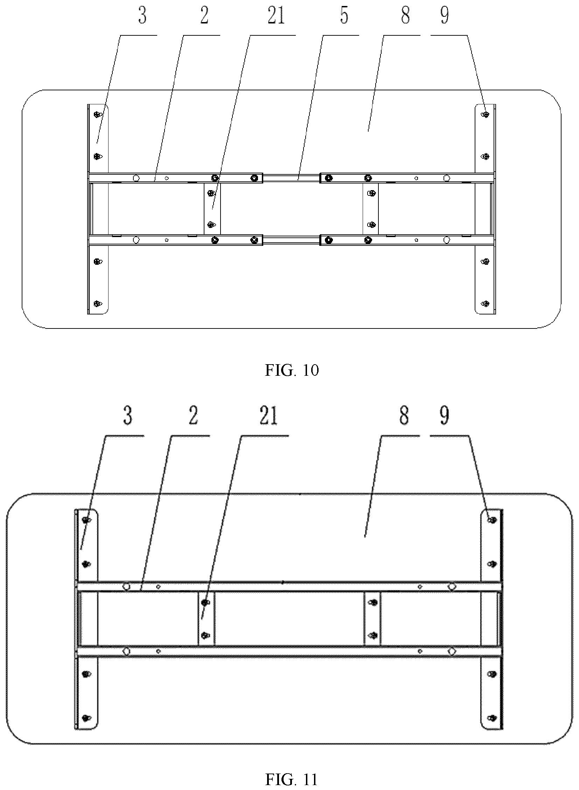

As shown in FIG. 11, the length of the lifting desk support in this embodiment is not adjustable, and the rest is the same as that in Embodiment 1.

The design with the same effect as that of the present disclosure made by exchanging the boss provided on the longitudinal beam and the notch provided on the cross beam assembly is also within the scope of protection of this patent.

The above specification only describes the specific embodiments of the present disclosure, and various examples do not limit the substance of the present disclosure. Those skilled in the art can modify or deform the previous specific embodiments after reading the specification without departing from the essence and scope of the present disclosure.

## Claims

1. A lifting desk support having rapid mounting structures, comprising a cross beam assembly, a longitudinal beam (3), a lifting desk leg (10) and a baseboard (14), with the cross beam assembly being mounted above the lifting desk leg (10), the baseboard (14) being mounted below the lifting desk leg (10), and the longitudinal beam (3) being mounted at a side end of the cross beam assembly, wherein the cross beam assembly and the longitudinal beam (3) are provided with at least one set of rapid mounting structures, which comprise a boss (4) arranged on the longitudinal beam (3) and a notch (1) on the cross beam assembly, and the boss (4) is embedded into the notch (1) to realize connection between the cross beam assembly and the longitudinal beam (3).

2. The lifting desk support having rapid mounting structures according to claim 1, wherein the boss (4) comprises a locking block (41) and a connecting part (42), the notch (1) comprises a first groove section (11) for passing through the locking block (41) and a second groove section (12) for limiting the locking block (41), the first groove section (11) is communicated with the second groove section (12), and the locking block (41) passes through the notch (1) through the first groove section (11) by applying a transverse force along an axial direction of the cross beam assembly, and the locking block (41) enters the second groove section (12) of the notch (1), such that the limiting is realized.

3. The lifting desk support having rapid mounting structures according to claim 2, wherein the boss (4) is formed by bending and extending downwards from a plane of the longitudinal beam (3), the locking block (41) has a slope with a upper surface (32) of the longitudinal beam (3); when the locking block (41) is mounted into the second groove section (12), the locking block (41) and the upper surface (32) of the longitudinal beam (3) are respectively arranged on two sides of the plane of the cross beam assembly, and the locking block (41) is gradually clamped against a tube wall of the cross beam assembly by applying the transverse force along the axial direction of the cross beam assembly, such that the longitudinal beam (3) and the cross beam assembly are locked.

4. The lifting desk support having rapid mounting structures according to claim 2, wherein in a direction perpendicular to the axial direction of the cross beam assembly, a width of the first groove section (11) is greater than that of the second groove section (12), a width of the locking block (41) is less than or equal to that of the first groove section (11) and greater than that of the second groove section (12), and a width of the locking block (41) is greater than that of the connecting part (42).

5. The lifting desk support having rapid mounting structures according to claim 2, wherein the notch further has a third groove section (13), and the third groove section (13) is arranged on the other side of the first groove section (11) relative to the second groove section (12) and communicated with the first groove section (11).

6. The lifting desk support having rapid mounting structures according to claim 1, wherein the cross beam assembly is of left and right split structures, which are slidably connected through connecting beams (5) to realize axial expansion.

7. The lifting desk support having rapid mounting structures according to claim 1, wherein the cross beam assembly comprises two cross beams (2) arranged in parallel and fixed by several bridge pieces (21).

8. The lifting desk support having rapid mounting structures according to claim 6, wherein at least one end of each connecting beam (5) is provided with a spacing device (7), and the cross beam assembly is fixedly connected with a fastening device (6) which is configured to fix the connecting beams (5), such that an expansion range is limited through cooperation between the spacing device (7) and the fastening device (6).

9. The lifting desk support having rapid mounting structures according to claim 6, wherein after the longitudinal beam (3) is assembled with the cross beam assembly, a fastening screw (9) passes through a preset through-hole (31) on the longitudinal beam (3) and a preset through-hole (31) on a bridge piece (21) to connect the support with a desk top (8).

10. A lifting desk, wherein the lifting desk comprises the lifting desk support having rapid mounting structures according to any one of claim 1 to claim 9.
